**Europäisches Patentamt**

(19) **European Patent Office**

**Office européen des brevets**

(11) Veröffentlichungsnummer: **0 099 454**

**B1**

(12) **EUROPÄISCHE PATENTSCHRIFT**

(45) Veröffentlichungstag der Patentschrift:
03.02.88

(21) Anmeldenummer: 83104766.7

(22) Anmeldetag: 14.05.83

(51) Int. Cl.⁴: **B 60 J 3/02**

(54) **Sonnenblende, insbesondere für Fahrzeuge.**

(30) Priorität: 20.07.82 DE 8220629 U

(43) Veröffentlichungstag der Anmeldung:
01.02.84 Patentblatt 84/5

(45) Bekanntmachung des Hinweises auf die Patenterteilung:
03.02.88 Patentblatt 88/5

(84) Benannte Vertragsstaaten:
DE FR GB IT SE

(56) Entgegenhaltungen:
FR-A-2 429 685
FR-A-2 453 042

(73) Patentinhaber: **Gebr. Happich GmbH, Postfach 10
02 49 Clausenbrücke 1, D-5600 V/u__ artal 1 (DE)**

(72) Erfinder: **Kaiser, Klaus- Peter, Sellscheid 42, D-5632
Wermelskirchen (DE)**
Erfinder: **Viertel, Lothar, V. Gartenreihe 48, D-6630
Saarlouis (DE)**

EP 0 099 454 B1

**Beschreibung**

Die Erfindung bezieht sich auf eine Sonnenblende, insbesondere für Fahrzeuge, mit einem Sonnenblendenkörper und mit einem Spiegel, der eine in seitlichen Führungen aufgenommene und in eine an einem Spiegelrand angrenzende Ausnehmung des Sonnenblendenkörpers einschiebbare Abdeckung aufweist. (Siehe z. B. FR-A-2 429 685 oder FR-A-2 453 042.)

In ständig zunehmendem Maße werden Fahrzeugsonnenblenden mit Spiegeln bestückt und aus verschiedenen Gründen, wie Verminderung der Blendungs- oder Verletzungsgefahr mit einer Abdeckung versehen. Als Spiegelabdeckungen werden am Sonnenblendenkörper oberhalb oder unterhalb des Spiegels angelenkte Klappdeckel oder auch Schieber verwendet, die in eine an einem vertikalen Spiegelrand angrenzende Ausnehmung des Sonnenblendenkörpers einschiebbar sind. Spiegelabdeckungen in Form von Schiebern sind solchen in Form von Klappdeckeln insofern überlegen, als sie zum Öffnen und Schließen nicht aus der Sonnenblendenkörperebene herausbewegt werden müssen. Andererseits besitzen die Schieber aber auch einen wesentlichen Nachteil, weil sie neben dem Spiegel einen Einschieberaum benötigen, der der Flächengröße des Spiegels entsprechende Abmessungen aufweisen muß. Durch die im Sonnenblendenkörper im allgemeinen eingebetteten Lager u. dgl. bietet der Sonnenblendenkörper aber nur einen begrenzten Bereich, in dem eine Ausnehmung zur Aufnahme eines Schiebedeckels vorgesehen werden kann. Bei aus Schiebern bestehenden Spiegelabdeckungen ergibt sich daher die Notwendigkeit, die Sonnenblenden mit relativ kleinen Spiegeln auszurüsten, was aber auf Seiten der Abnehmerschaft verstärkt auf Ablehnung gestoßen ist.

Ausgehend von einer Sonnenblende der eingangs genannten Art ist es nun Aufgabe der Erfindung, Sonnenblendenkörper mit Spiegeln ausrüsten zu können, deren Flächenabmessung den Wünschen der Käuferschaft entgegenkommt und für die Spiegel eine Abdeckung zur Verfügung zu stellen, die beim Öffnen und Schließen nicht aus der Sonnenblendenkörperebene herausbewegt zu werden braucht.

Gemäß der Erfindung wird diese Aufgabe dadurch gelöst, daß die Länge der Ausnehmung wesentlich kürzer als die gestreckte Länge der aus quer zur Schieberichtung nebeneinander angeordneten und miteinander gelenkig verbundenen Lamellen bestehenden Abdeckung ausgebildet ist. Dabei kann die Abdeckung alternativ unter Bildung einer Schlaufe in die Ausnehmung einschiebbar oder nach Art eines Rolladens innerhalb der Ausnehmung aufrollbar oder auch zur Spiegelrückseite hin umlenkbar sein. Der erfindungsgemäße Effekt ist, gleichgültig, welche von den aufgezeigten erfindungsgemäßen Maßnahmen auch immer ergriffen wird, der, daß die Spiegelabdeckung für ihre Unterbringung bei Nichtgebrauch einen äußerst geringen Raumbedarf beansprucht, so daß der eingesparte Raum dem Spiegel zugeschlagen werden kann.

Die der Erfindung zugrunde liegende Aufgabe wird alternativ dadurch gelöst, daß die Abdeckung aus einem Rollo mit einer innerhalb der Ausnehmung angeordneten Wickelachse besteht.

Hierbei kann die Abdeckung aus einem auf die Wickelachse aufrollbaren Textilband, einem Kunststoffband, welches ggf. beflockt oder mit einem Textilband kaschiert ist, oder aus einer bandförmigen Metallfolie bestehen. Weiterhin kann die Wickelachse, wie bei Fensterrollos an sich bekannt, eine Aufrollautomatik aufweisen, und das Rolloband kann in der den Spiegel abdeckenden Lage durch einen am freien Ende angegebenen Haken, einen Magneten od. dgl., gegen ein nichtgewolltes Aufrollen gesichert sein.

Weitere vorteilhafte Ausgestaltungen der Erfindung sind in den Unteransprüchen gekennzeichnet.

Ausführungsbeispiele der Erfindung werden nachfolgend anhand der Zeichnung näher erläutert. Es zeigen

Fig. 1 eine Sonnenblende in Gesamtansicht,

Fig. 2 einen Schnitt II - II nach Fig. 1 im vergrößerten Maßstab,

Fig. 3 einen Schnitt III - III nach Fig. 1 im vergrößerten Maßstab,

Fig. 4 bis 7 jeweils eine Einzelheit der Sonnenblende,

Fig. 8 einen Schnitt II - II nach Fig. 1 in einer gegenüber Fig. 2 abgewandelten Ausführungsform und

Fig. 9 eine weitere Ausführungsform der Erfindung.

Die Sonnenblende besteht aus einem Sonnenblendenkörper 1 mit an einem Endbereich der oberen Längskante 2 angeordneten aus Gehäuse 3 und Sonnenblendenachse 4 bestehendem Schwenklager und einer am anderen Endbereich angeordneten Gegenlagerachse 5, die lösbar in ein Gegenlagergehäuse (nicht gezeigt) einsteckbar ist sowie mit einem Spiegel 6, der in einem Rahmen 7 sitzt, von zumindest einem als Lichtquelle dienenden Glühbirnchen 8 beleuchtbar ist und von einer Abdeckung abdeckbar ist.

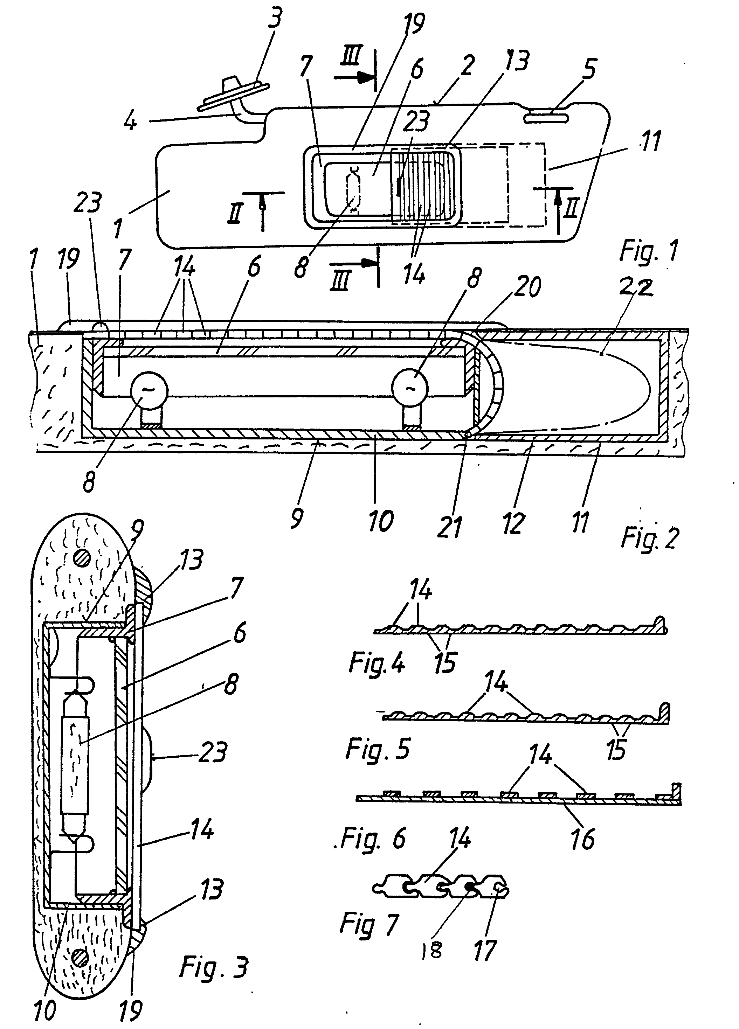

Fig. 2 und 3 zeigen im Schnitt daß der Sonnenblendenkörper 1 eine zu einer Breitfläche hin offene, kammerförmige Aussparung 9 besitzt, in welcher ein rechteckiger Kasten 10 angeordnet Ist. An die Aussparung 9 schließt sich einendig eine Ausnehmung 11 an, in der ein zum Spiegelrahmen 7 hin offener Kasten 12 angeordnet ist.

Der Kasten 10 haltert den Rahmen 7, beispielsweise mittels nicht dargestellter Klipse, und der Rahmen 7, der bevorzugt aus einem lichtdurchlässiger Material hergestellt ist, haltert den Spiegel 6.

Die Abdeckung für den Spiegel 6 besteht aus in seitlichen Führungen 13 aufgenommenen Lamellen 14, die gelenkig miteinander verbunden sind. Die Lamellen 14 können gemäß den in Fig. 4 und 5 gezeigten Ausführungsformen wahlweise aus dem Abschnitt eines Kunststoffstrangpreßprofils oder einem Kunststoffspritzgußteil gebildet und über Filmscharniere 15 einstückig miteinander verbunden sein. Die Lamellen 14 können im Querschnitt quadratisch, rechteckig, kegelstumpfförmig (Fig. 4), oval oder auch halbrund (Fig. 5) ausgebildet sein.

Bei der in Fig. 6 gezeigten Variante bestehen die Lamellen 14 jeweils aus dem Abschnitt eines Strangpreßprofils aus Kunststoff oder Metall, insbesondere Leuchtmetall, oder auch aus dem Abschnitt eines gerollten Blechprofils. Die Lamellen 14 werden hier durch einen Textilrücken 16, eine Kunststoffolie oder durch Kunststoffbänder zusammengehalten.

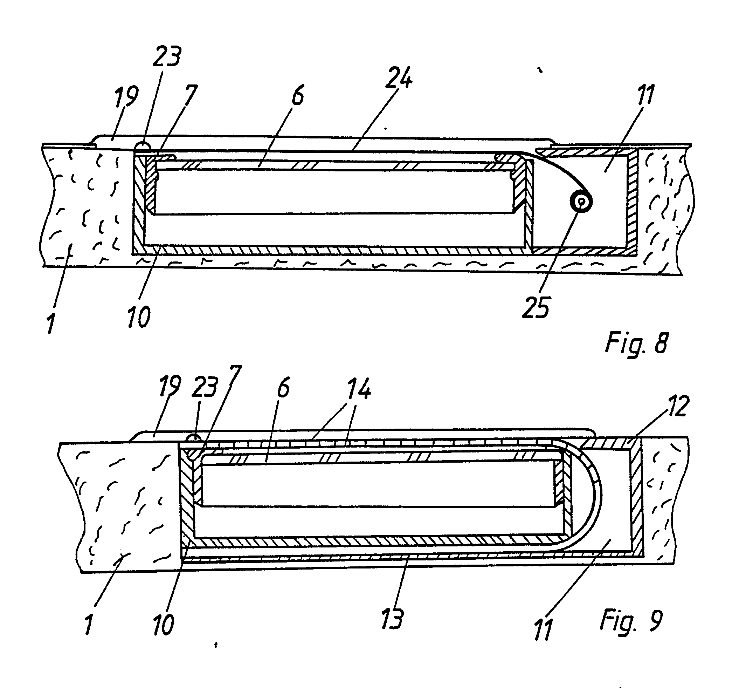

Eine weitere Variante zeigt Fig. 7. Hier bestehen die Lamellen 14 ebenfalls aus Strangpreßprofilabschnitten. Jede Lamelle 14 weist an einer Längskante eine hinterschnittene Rundnut 17 und an der anderen Längskante einen pilzkopfartigen Längswulst 18 auf, und die Lamellen 14 können durch Ineinanderschieben von Rundnut 17 und Längswulst 18 gelenkig aneinander festgelegt werden.

Die aus den Lamellen 14 gebildete und zwischen den seitlichen Führungen 13, die in einem Rahmen 19 ausgebildet sein können, aufgenommene Abdeckung besitzt eine gestreckte Länge, die ausreicht, um den Spiegel 6 und den Rahmen 7 vollkommen abdecken und den Blicken eines Betrachters entziehen zu können. Soll jedoch der Spiegel 6 und der (Leucht-) Rahmen 7 freigelegt werden, so wird dies durch Verschieben der Abdeckung in einfacher Weise ermöglicht, wobei dann die Lamellen 14 durch eine Schlitzöffnung 20 in die Ausnehmung 11 bzw. in das darin angeordnete Gehäuse 12 hineingleiten. Zufolge der gelenkigen Verbindung der einzelnen Lamellen 14 untereinander kann die Abdeckung unter Bildung einer Schlaufe, vgl. die strichpunktierte Linie 22 in Fig. 2, innerhalb der Ausnehmung 11 bzw. dem Gehäuse 12, gegenüber ihrer gestreckten Länge wesentlich verkürzt untergebracht werden. Dabei ist dann das freie Ende der Abdeckung (vgl. Fig. 2) am unteren Rand des den Spiegel 6 nebst Rahmen 7 aufnehmenden Gehäusekastens 10 befestigt, wobei der Befestigungspunkt mit 21 bezeichnet ist.

Eine nicht dargestellte erfindungsgemäße Variante sieht vor, die miteinander verbundenen Lamellen 14 innerhalb der Ausnehmung 11, z. B. auf eine Spule aufzuwickeln.

Fig. 9 zeigt eine erfindungsgemäße Lösung, bei der die aus gelenkig miteinander verbundenen Lamellen 14 bestehende Abdeckung in seitlichen Führungen 13 aufgenommen sind, die zunächst geradlinig entlang der Spiegelsichtseite verlaufen, halbkreisförmig durch die Ausnehmung 11 verlaufen und sich dann parallel zur Spiegelrückseite erstreckend verlängert sind. Die Ausnehmung 11 ist hier bis unter die Spiegelrückseite reichend verlängert. Bei dieser erfindungsgemäßen Ausführungsform kann die Spiegelfläche sehr groß sein; denn für die Unterbringung der Spiegelabdeckung ist ein nur sehr geringer Platzbedarf erforderlich.

Bei allen bisher beschriebenen Ausführungsformen ist die Abdeckung mit einer Handhabe 23 für ihre Betätigung versehen.

Fig. 8 zeigt eine besondere Ausführungsform insofern, als hier die Spiegelabdeckung aus einem Rollo mit einem Rollobehang 24 und einer Wickelachse 25 besteht. Der Rollobehang 24 kann aus einem dünnen Textilband, einem Kunststoffband oder auch aus einer Metallfolie bestehen. Die Wickelachse 25 ist zweckmäßigerweise mit einer Aufrollautomatik ausgerüstet, so daß das Rollo etwa so bedient werden kann, wie es bei Fensterrollos z. B. bekannt ist. Das Rollo kann eine Handhabe 23 aufweisen und an dem die Handhabe 23 tragenden Ende Arretierungsmittel, wie einen Haken, einen Magneten od. dgl. besitzen. Eine Spiegelabdeckung als Rollo auszubilden ist insofern von Vorteil, als die Spiegelabdeckung bei Nichtgebrauch auf denkbar kleinem Platz untergebracht werden kann.

**Patentansprüche**

1. Sonnenblende, insbesondere für Fahrzeuge, mit einem Sonnenblendenkörper (1) und mit einem Spiegel (6), der eine in seitlichen Führungen (13) aufgenommene und in eine an einem Spiegelrand angrenzende Ausnehmung (11) des Sonnenblendenkörpers (1) einschiebbare Abdeckung aufweist, dadurch gekennzeichnet, daß die Länge der Ausnehmung (11) wesentlich kürzer als die gestreckte Länge der und miteinander gelenkig verbundenen Lamellen (14) bestehenden Abdeckung ausgebildet ist.

2. Sonnenblende nach Anspruch 1, dadurch gekennzeichnet, daß die Abdeckung unter Bildung einer Schlaufe in die Ausnehmung (11) einschiebbar ist.

3. Sonnenblende nach Anspruch 1 oder 2, dadurch gekennzeichnet, daß das der Ausnehmung (11) zugeordnete Ende der Abdeckung am unteren Rand eines den Spiegel (6) und gegebenenfalls eine Spiegelbeleuchtung aufnehmenden, an der Ausnehmung (11) angrenzenden kastenförmigen Gehäuses (10) angeordnet ist.

4. Sonnenblende nach Anspruch 1, dadurch gekennzeichnet, daß die Abdeckung nach Art eines Rolladens innerhalb der Ausnehmung (11) aufrollbar ist.

5. Sonnenblende nach Anspruch 1, dadurch gekennzeichnet, daß die seitlichen Führungen (13) für die Abdeckung halbkreisförmig durch die Ausnehmung (11) verlaufend und sich etwa parallel zur Spiegelrückseite erstreckend verlängert sind, wobei die Ausnehmung (11) bis unter die Spiegelrückseite reichend erweitert ist.

6. Sonnenblende nach einem oder mehreren der Ansprüche 1 bis 5, dadurch gekennzeichnet, daß in die Ausnehmung (11) des Sonnenblendenkörpers (1) ein zum Spiegel (6) bzw. Spiegelgehäuse (10) hin offener Kasten (12) eingesetzt ist, welcher bündig mit der entsprechenden Außenfläche des Sonnenblendenkörpers (1) abschließt.

7. Sonnenblende nach einem oder mehreren der Ansprüche 1 bis 6, dadurch gekennzeichnet, daß die Abdeckung als einstückiges Kunststoffspritzgußteil ausgebildet ist.

8. Sonnenblende nach einem oder mehreren der Ansprüche 1 bis 6, dadurch gekennzeichnet, daß die Abdeckung aus dem Abschnitt eines Kunststoffstrangpreßprofils besteht.

9. Sonnenblende nach einem oder mehreren der Ansprüche 1 bis 8, dadurch gekennzeichnet, daß die die Abdeckung bildenden Lamellen (14) jeweils über ein Filmscharnier (15) miteinander verbunden sind.

10. Sonnenblende nach einem oder mehreren der Ansprüche 1 bis 6, dadurch gekennzeichnet, daß die die Abdeckung bildenden Lamellen (14) aus über Verbindungsmittel aneinander festgelegten Einzelstäbchen bestehen.

11. Sonnenblende nach Anspruch 10, dadurch gekennzeichnet, daß die Einzelstäbchen Abschnitte von Kunststoff- oder Leichtmetallstrangpreßprofilen oder von durch Profilrollen oder dergleichen zu Leisten geformten Blechbändern sind.

12. Sonnenblende nach Anspruch 10 oder 11, dadurch gekennzeichnet, daß die Lamellen (14) durch einen aufgebrachten Folien- oder Textilbahnrücken (16) miteinander verbunden sind.

13. Sonnenblende nach Anspruch 10 oder 11, dadurch gekennzeichnet, daß jede Lamelle (14) an einer Längskante mit einem pilzkopfartigen Längswulst (18) und an der anderen Längskante mit einer hinterschnittenen Rundnut (17) ausgebildet ist und daß die Lamellen (14) durch Ineinandergreifen von Längswulst (18) und Rundnut (17) gelenkig miteinander verbunden sind.

14. Sonnenblende nach einem oder mehreren der Ansprüche 1 bis 13, dadurch gekennzeichnet, daß die Abdeckung wahlweise in horizontaler oder vertikaler Richtung verschiebbar am Sonnenblendenkörper (1) angeordnet ist.

15. Sonnenblende, insbesondere für Fahrzeuge, mit einem Sonnenblendenkörper (1) und mit einem Spiegel (6), der eine in seitlichen Führungen (13) aufgenommene und in eine an einem Spiegelrand angrenzende Ausnehmung (11) des Sonnenblendenkörpers (1) einbringbare Abdeckung aufweist, dadurch gekennzeichnet, daß die Abdeckung aus einem Rollo mit einer innerhalb der Ausnehmung (11) angeordneten Wickelachse (25) besteht.

16. Sonnenblende nach Anspruch 15, dadurch gekennzeichnet, daß die Abdeckung aus einem auf die Wickelachse (25) aufrollbaren Textilband (24), einem Kunststoffband, welches gegebenenfalls beflockt oder mit einem Textilband kaschiert ist oder aus einer bandförmigen Metallfolie besteht.

17. Sonnenblende nach Anspruch 15 oder 16, dadurch gekennzeichnet, daß die Wickelachse (24) eine Aufrollautomatik aufweist.

18. Sonnenblende nach einem oder mehreren der Ansprüche 15 bis 17, dadurch gekennzeichnet, daß das Rolloband (24) in der den Spiegel (6) abdeckenden Lage durch einen am freien Ende angeordneten Haken, einen Magneten oder dergleichen, gegen ein nichtgewolltes Aufrollen gesichert ist.

**Claims**

1. A sun visor, especially for a vehicle, comprising a main visor body (1) and a mirror (6), the latter being provided with a cover held in lateral slideways (13) and being slidable into a recess (11) in the main body (1) adjacent to one of the mirror's edges, characterized in that the length of the recess (11) is considerably shorter than the fully extended length of the cover which is made up of hingedly joined segments (14) arranged adjacent to each other in a direction transverse to that along which the cover is slidable.

2. A sun visor according to claim 1, characterized in that the cover is loopingly slidable into the recess (11).

3. A sun visor according to claim 1 or claim 2, characterized in that the cover's end associated with the recess (11) is arranged at the lower edge of a box-type casing (10) housing the mirror (6) and - if provided - a mirror light and adjoining the recess (11).

4. A sun visor according to claim 1, characterized in that the cover is arranged to be rolled up in the recess (11) like a roller blind.

5. A sun visor according to claim 1, characterized in that the cover's lateral slideways (13) are lengthened by extending them semi-circularly through the recess (11) and thereafter substantially parallel with the rear of the mirror, and in that the recess (11) is lengthened so as to extend to below the mirror's rear.

6. A sun visor according to any one or more of the claims 1 to 5, characterized in that a box (12) is inserted into the recess (11) of the main body (1), that the side of the box adjoining the mirror (6) and the mirror's casing (10) is open, and in that the box terminates flush with the respective outer face of the main body (1).

7. A sun visor according to any one or more of the claims 1 to 6, characterized in that the cover is a one-piece injection-moulded synthetic component.

8. A sun visor according to any one or more of the claims 1 to 6, characterized in that the cover is a cutting of an extruded synthetic profile.

9. A sun visor according to any one or more of the claims 1 to 8, characterized in that the segments (14) making up the cover are joined to each other by hinges (15) of film-like thickness and flexibility.

10. A sun visor according to any one or more of the claims 1 to 6, characterized in that the segments (14) making up the cover are individual ones joined to each other by connecting means.

11. A sun visor according to claim 10, characterized in that the individual segments are cuttings of an extruded synthetic or light-metal profile or are cuttings of a steel strip shaped by a profiled roller to form fillets.

12. A sun visor according to claim 10 or claim 11, characterized in that the segments are joined to each other by a foil web or a textile web (16) secured to their rear sides.

13. A sun visor according to claim 10 or claim 11, characterized in that each segment (14) is formed at one of its longitudinal edges with a mushroom head-like prolonged bead (18) and at its other longitudinal edge with an undercut round slot (17), and in that the segments (14) are hingedly joined to each other as a result of the prolonged bead (18) of one segment engaging the round slot (17) of another.

14. A sun visor according to any one or more of the claims 1 to 13, characterized in that the cover is selectively fittable to the main body (1) so as to slide either in horizontal or vertical direction.

15. A sun visor, especially for a vehicle, comprising a main visor body (1) and a mirror (6), the latter being provided with a cover held in lateral slideways (13) and being slidable into a recess (11) in the main body (1) adjacent to one of the mirror's edges, characterized in that the cover is a roller curtain having a winding shaft (25) arranged in the recess (11).

16. A sun visor according to claim 15, characterized in that the cover is a textile band (24) or a synthetic band - which, if desired, is flocked or lined with a textile band - or a band-shaped metal foil, and in that any of the bands are capable of being rolled onto the winding shaft (25).

17. A sun visor according to claim 15 or claim 16, characterized in that the winding shaft (25) includes an automatic rolling-up device.

18. A sun visor according to any one or more of the claims 15 to 17, characterized in that the band forming the roller curtain (24) is securable - after it has been unrolled into its mirror (6) -covering position - against any unintentional rolling-up by a hook or a magnet or the like arranged at its free end.

**Revendications**

1. Pare-soleil, notamment pour véhicule, comprenant un corps (1) et un miroir (6) comportant un élément de recouvrement reçu dans des guides latéraux (13) et pouvant être enfoncé dans un évidement (11) du corps du pare-soleil (1) limitrophe du bord du miroir, caractérisé en ce que la longueur de l'évidement (11) est sensiblement plus courte que la longueur déployée de l'élément de recouvrement formé par des lamelles (14) disposées les unes contre les autres transversalement à la direction du mouvement de coulissement et reliées de façon articulée les unes aux autres.

2. Pare-soleil selon la revendication 1, caractérisé en ce que l'élément de recouvrement peut être enfoncé dans l'évidement (11) en formant une boucle.

3. Pare-soleil selon la revendication 1 ou 2, caractérisé en ce que l'extrémité de l'élément de recouvrement qui est associée à l'évidement (11) est disposée sur le bord inférieur d'un logement (10) en forme de cassette et limitrophe de l'évidement (11) recevant le miroir (6) et éventuellement un éclairage pour le miroir.

4. Pare-soleil selon la revendication 1, caractérisé en ce que l'élément de recouvrement peut être enroulé à l'intérieur de l'évidement (11) à la manière d'un volet roulant.

5. Pare-soleil selon la revendication 1, caractérisé en ce que les guides latéraux (13) de l'élément de recouvrement traversent l'évidement (11) en forme de demi-cercle et se prolongent sensiblement parallèlement au côté arrière du miroir, l'évidement (1) étant suffisamment large jusque sous le côté arrière du miroir.

6. Pare-soleil selon l'une ou plusieurs des revendications 1 à 5, caractérisé en ce qu'une cassette (12) ouverte en direction du miroir (6) ou du logement (10) du miroir est introduite dans l'évidement (11) du corps (1) du pare-soleil, cette cassette se raccordant en bord à bord avec la surface externe correspondante du corps (1) du pare-soleil.

7. Pare-soleil selon l'une ou plusieurs des revendications 1 à 6, caractérisé en ce que l'élément de recouvrement est constitué sous forme d'une pièce moulée d'un seul tenant en matière plastique.

8. Pare-soleil selon l'une ou plusieurs des revendications 1 à 6, caractérisé en ce que l'élément de recouvrement est constitué par une section d'un profilé de matière platique extrudé.

9. Pare-soleil selon l'une ou plusieurs des revendications 1 à 8, caractérisé en ce que les lamelles (14) formant l'élément de recouvrement sont reliées les unes aux autres par un film formant charnière (15),

10. Pare-soleil selon l'une ou plusieurs des revendications 1 à 6, caractérisé en ce que les lamelles (14) formant l'élément de recouvrement sont constituées par des barrettes individuelles fixées les unes aux autres par un moyen de liaison.

11. Pare-soleil selon la revendication 10, caractérisé en ce que les barrettes individuelles sont constituées par des profilés extrudés de matière plastique ou de métal léger ou par des bandes de tôle formées en baguettes par des rouleaux profilés ou analogues.

12. Pare-soleil selon la revendication 10 ou 11, caractérisé en ce que les lamelles (14) sont reliées les unes aux autres par une bande de dos en feuille ou en textile (16) disposée sur elles.

13. Pare-soleil selon la revendication 10 ou 11, caractérisé en ce que chaque lamelle (14) est constituée sur un bord longitudinal sous forme d'un bourrelets en tête de champignon (18) et sur le bord longitudinal opposé sous forme d'une gorge ronde en contre-dépouille (17) et en ce que les lamelles (14) sont reliées les unes aux autres par introduction entre bourrelets longitudinaux (18) et gorges rondes (17).

14. Pare-soleil selon l'une quelconque des revendications 1 à 13, caractérisé en ce que l'élément de recouvrement est monté de façon mobile sur le corps (1) du pare-soleil au choix en direction horizontale ou en direction verticale.

15. Pare-soleil, notamment pour véhicule, comprenant un corps (1) et un miroir (6) comportant un élément de recouvrement reçu dans des guides lateraux (13) et pouvant être monté dans un évidement (11) du corps du pare-soleil (1) limitrophe d'un bord du miroir, caractérisé en ce que l'élément de recouvrement est constitué par un store comportant un axe d'enroulement (25) disposé a l'interieur de l'évidement (11).

16. Pare-soleil selon la revendication 15, caractérisé en ce que l'élément de recouvrement est constitué par une bande de textile (24), une bande de matière plastique floquée ou recouverte d'une bande de textile, ou d'une feuille métallique en bande pouvant être enroulée sur l'axe d'enroulement (25).

17. Pare-soleil selon la revendication 15 ou 16, caractérisé en ce que l'axe d'enroulement (24) comprend un système automatique d'enroulement.

18. Pare-soleil selon l'une ou plusieurs des revendications 15 à 17, caractérisé en ce que la bande de store (24) est retenue et empêchée de se dérouler de façon non intentionnelle dans une position recouvrant le miroir au moyen d'un crochet, d'un aimant ou analogue prévu à son extrémité libre.

0 099 454

Fig. 1

Fig. 2

Fig. 3

Fig. 4

Fig. 5

Fig. 6

Fig 7

Fig. 8

Fig. 9